# EUROPEAN PATENT APPLICATION

(11) **EP 4 322 258 A1**
(43) Date of publication of application: **14.02.2024**
(21) Application number: 22810945.0
(22) Date of filing: 16.03.2022
(51) Int. Cl.: H01M 4/505, H01M 4/525, H01M 4/587, H01G 11/06, H01G 11/30, H01G 11/42, H01M 10/052

(54) **NONAQUEOUS ELECTROLYTE POWER STORAGE ELEMENT AND POWER STORAGE DEVICE**

(30) Priority: 28.05.2021 JP 2021089962
(71) Applicant: GS Yuasa International Ltd., Kisshoin, Minami-ku, Kyoto-shi, Kyoto 601-8520 (JP)
(72) Inventor: YAMAKAWA, Yuto, Kyoto-shi, Kyoto 601-8520 (JP)
(74) Representative: Isarpatent
(86) International application number: PCT/JP2022/011770
(87) International publication number: WO 2022/249667

(57) **Abstract**

A nonaqueous electrolyte energy storage device according to one aspect of the present invention includes a positive electrode including a lithium transition metal composite oxide containing manganese; and a negative electrode including graphite, in which a ratio of manganese to metal elements other than lithium in the lithium transition metal composite oxide is 20 mol% or less, and depth of charge of the graphite in a charged state is less than 0.54.

## Description

### TECHNICAL FIELD

The present invention relates to a nonaqueous electrolyte energy storage device and an energy storage apparatus.

### BACKGROUND ART

Nonaqueous electrolyte secondary batteries typified by lithium ion secondary batteries are widely used in electronic equipment such as personal computers and communication terminals, motor vehicles, and the like since these secondary batteries have a high energy density. Nonaqueous electrolyte secondary batteries generally include a pair of electrodes, which are electrically separated from each other by a separator, and a nonaqueous electrolyte interposed between the electrodes, and are configured to allow ions to be transferred between the two electrodes for charge-discharge. In addition, capacitors such as lithium ion capacitors and electric double layer capacitors are also widely used as nonaqueous electrolyte energy storage devices other than the nonaqueous electrolyte secondary batteries.

Heretofore, a lithium transition metal composite oxide having an α-NaFeO₂-type crystal structure has been examined as a positive active material for a nonaqueous electrolyte energy storage device, and a nonaqueous electrolyte secondary battery using LiCoO₂ has been widely put to practical use. However, LiCoO₂ is expensive to manufacture and is difficult to stably supply. Therefore, a positive active material containing manganese and the like together with cobalt, such as LiNi_{1/3}Co_{1/3}Mn_{1/3}O₂, has been developed and put to practical use (see Patent Document 1). On the other hand, for a negative active material, a carbon material such as graphite is widely used (see Patent Document 2).

### PRIOR ART DOCUMENTS

### PATENT DOCUMENTS

Patent Document 1: JP-A-2015-18678
Patent Document 2: JP-A-2005-222933

### SUMMARY OF THE INVENTION

### PROBLEMS TO BE SOLVED BY THE INVENTION

The nonaqueous electrolyte energy storage device is required to have a discharge capacity that is less likely to decrease even when charge-discharge is repeated, that is, a high capacity retention ratio after a charge-discharge cycle. Even in a nonaqueous electrolyte energy storage device including a positive electrode having a lithium transition metal composite oxide containing manganese which can be stably supplied at low cost, the capacity retention ratio after a charge-discharge cycle is expected to be improved.

An object of the present invention is to provide a nonaqueous electrolyte energy storage device and an energy storage apparatus having a high capacity retention ratio after a charge-discharge cycle.

### MEANS FOR SOLVING THE PROBLEMS

A nonaqueous electrolyte energy storage device according to one aspect of the present invention includes a positive electrode including a lithium transition metal composite oxide containing manganese; and a negative electrode including graphite, in which a ratio of manganese to metal elements other than lithium in the lithium transition metal composite oxide is 20 mol% or less, and depth of charge of the graphite in a charged state is less than 0.54.

### ADVANTAGES OF THE INVENTION

According to one aspect of the present invention, it is possible to provide a nonaqueous electrolyte energy storage device and an energy storage apparatus having a high capacity retention ratio after a charge-discharge cycle.

### BRIEF DESCRIPTION OF THE DRAWINGS

Fig. 1 is a see-through perspective view illustrating an embodiment of a nonaqueous electrolyte energy storage device.
Fig. 2 is a schematic diagram illustrating an embodiment of an energy storage apparatus configured by assembling a plurality of nonaqueous electrolyte energy storage devices.

### MODE FOR CARRYING OUT THE INVENTION

First, outlines of a nonaqueous electrolyte energy storage device and an energy storage apparatus disclosed in the present specification will be described.

A nonaqueous electrolyte energy storage device according to one aspect of the present invention includes a positive electrode including a lithium transition metal composite oxide containing manganese; and a negative electrode including graphite, in which a ratio of manganese to metal elements other than lithium in the lithium transition metal composite oxide is 20 mol% or less, and depth of charge of the graphite in a charged state is less than 0.54.

The nonaqueous electrolyte energy storage device has a high capacity retention ratio after a charge-discharge cycle. The reason for this is not clear, but the following reasons are presumed. In general, a decrease in the capacity retention ratio of the nonaqueous electrolyte energy storage device with a charge-discharge cycle is affected by a decrease in electron conductivity due to cracking or the like of the positive active material. On the other hand, in the lithium transition metal composite oxide containing manganese as a positive active material, the higher the content ratio of manganese, the lower the electron conductivity. Therefore, by using a lithium transition metal composite oxide containing manganese and having a low content ratio of manganese, sufficient electron conductivity can be secured even when cracking of the lithium transition metal composite oxide occurs with a charge-discharge cycle. In addition, as a cause of cracking of the positive active material, the positive active material is repeatedly pressurized by expansion and contraction of the negative active material due to repetition of charge-discharge. Therefore, by reducing the depth of charge of the graphite as the negative active material in the charged state, expansion of the graphite in the charged state is suppressed, and cracking of the lithium transition metal composite oxide as the positive active material is less likely to occur. For these reasons, it is presumed that the nonaqueous electrolyte energy storage device has an increased capacity retention ratio after a charge-discharge cycle.

The term "graphite" refers to a carbon material in which an average lattice distance (d₀₀₂) of the (002) plane determined by an X-ray diffraction method before charge-discharge or in a discharged state is 0.33 nm or more and less than 0.34 nm. The "discharged state" of the carbon material means a state discharged such that lithium ions that can be stored and released in association with charge-discharge are sufficiently released from the carbon material that is the negative active material. For example, the "discharged state" refers to a state where an open circuit voltage is 0.7 V or higher in a monopolar battery that has, for use as a working electrode, a negative electrode containing a carbon material as a negative active material, and has metal Li for use as a counter electrode.

The "depth of charge of graphite in a charged state" refers to a ratio of an amount of charge per mass of graphite in a charged state to a theoretical capacity per mass of graphite. The "theoretical capacity" refers to the maximum amount of electricity that can be stored by an active material per unit mass in an assumed electrochemical reaction, and the theoretical capacity of graphite in the present specification is 372 mAh/g. Also, the "charged state" refers to a state where the nonaqueous electrolyte energy storage device is charged with electricity until reaching a rated upper limit voltage for securing a rated capacity determined by design in advance. In a case where the rated capacity is not clear, the "charged state" refers to a state, when charging the nonaqueous electrolyte energy storage device with electricity using a charge control apparatus adopted by the nonaqueous electrolyte energy storage device, the nonaqueous electrolyte energy storage device is charged with electricity to the end-of-charge voltage when the charge operation is controlled to be stopped. For example, a state where the nonaqueous electrolyte energy storage device is subjected to constant current charge at a current of 1/3 C to a rated upper limit voltage or end-of-charge voltage and then constant voltage charge until the current reaches 0.01 C at a rated upper limit voltage or end-of-charge voltage is a typical example of the "charged state" referred to herein.

The "amount of charge per mass of graphite in a charged state" is specifically measured by the following procedure.
(1) A target nonaqueous electrolyte energy storage device is discharged to a lower limit voltage (SOC 0%) when the rated capacity is obtained, and then disassembled in a glove box controlled to an argon atmosphere having an oxygen concentration of 5 ppm or less.
(2) In the glove box, the positive electrode and the negative electrode are taken out, and a small pouch cell (I) is assembled.
(3) After the small pouch cell (I) is charged with electricity to the charged state, constant current discharge is performed at a current of 0.01 C up to the lower limit voltage at which the rated capacity is obtained by the nonaqueous electrolyte energy storage device.
(4) In the glove box controlled to an argon atmosphere having an oxygen concentration of 5 ppm or less, the small pouch cell (I) is disassembled. The negative electrode is taken out, and a small pouch cell (II) in which lithium metal is disposed as a counter electrode is assembled.
(5) Additional discharge is performed at a current of 0.01 C until the voltage of the small pouch cell (II) reaches 2.0 V, and the negative electrode is adjusted to a full discharged state.
(6) The total of discharge capacities in the above (3) and (5) is divided by the mass of graphite in a negative active material layer of a positive and negative electrode facing portion in the small pouch cell (I) to obtain an amount of charge per mass of graphite in the charged state.

Herein, it is to be noted that a reductive reaction of occluding lithium ions and the like from the negative active material is referred to as "charge", whereas an oxidative reaction of releasing lithium ions and the like from the negative active material is referred to as "discharge".

The lithium transition metal composite oxide preferably further contains nickel and cobalt. In such a case, the capacity retention ratio after a charge-discharge cycle is further increased.

A nonaqueous electrolyte energy storage device, an energy storage apparatus, and a method for manufacturing a nonaqueous electrolyte energy storage device according to an embodiment of the present invention, and other embodiments will be described in detail. The names of the respective constituent members (respective constituent elements) for use in the respective embodiments may be different from the names of the respective constituent members (respective elements) for use in the background art.

### <Nonaqueous electrolyte energy storage device>

A nonaqueous electrolyte energy storage device according to an embodiment of the present invention (hereinafter, also referred to simply as an "energy storage device") includes: an electrode assembly including a positive electrode, a negative electrode, and a separator; a nonaqueous electrolyte; and a case that houses the electrode assembly and the nonaqueous electrolyte. The electrode assembly is usually a stacked type in which a plurality of positive electrodes and a plurality of negative electrodes are stacked with a separator interposed therebetween, or a wound type in which a positive electrode and a negative electrode are wound in a state of being stacked with a separator interposed therebetween. The nonaqueous electrolyte is present in a state of being contained in the positive electrode, the negative electrode, and the separator. A nonaqueous electrolyte secondary battery (hereinafter, also simply referred to as a "secondary battery") will be described as an example of the nonaqueous electrolyte energy storage device.

### (Positive electrode)

The positive electrode has a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of 10⁻² Ω cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, and A1N30 specified in JIS-H-4000 (2014) or JIS-H4160 (2006).

The average thickness of the positive substrate is preferably 3 pm or more and 50 pm or less, more preferably 5 pm or more and 40 pm or less, further preferably 8 pm or more and 30 pm or less, particularly preferably 10 pm or more and 25 pm or less. By setting the average thickness of the positive substrate in the above range, it is possible to enhance the energy density per volume of a secondary battery while increasing the strength of the positive substrate.

The intermediate layer is a layer arranged between the positive substrate and the positive active material layer. The intermediate layer includes a conductive agent such as carbon particles to reduce contact resistance between the positive substrate and the positive active material layer. The configuration of the intermediate layer is not particularly limited, and includes, for example, a binder and a conductive agent.

The positive active material layer includes a positive active material. The positive active material layer contains optional components such as a conductive agent, a binder (binding agent), a thickener, a filler, or the like as necessary.

The positive active material contains a lithium transition metal composite oxide containing manganese. The lithium transition metal composite oxide preferably further contains at least one of nickel and cobalt, and more preferably further contains both nickel and cobalt. By using a lithium transition metal composite oxide containing these transition metal elements, discharge capacity can be increased, and the like.

The upper limit of the ratio of manganese to metal elements other than lithium in the lithium transition metal composite oxide is 20 mol%, and may be 19 mol%, is preferably 18 mol%, may be more preferably 17 mol%, is further preferably 16 mol%, and may be still more preferably 15 mol%. When the ratio of manganese is equal to or less than the upper limit, the electron conductivity of the lithium transition metal composite oxide can be enhanced, and the capacity retention ratio of the nonaqueous electrolyte energy storage device after a charge-discharge cycle can be enhanced. On the other hand, the lower limit of the ratio of manganese is preferably 1 mol%, may be 2 mol%, 3 mol%, or 4 mol%, is more preferably 5 mol%, may be more preferably 6 mol%, 7 mol%, 8 mol%, or 9 mol%, is further preferably 10 mol%, and may be still more preferably 11 mol%, 12 mol%, 13 mol%, 14 mol%, or 15 mol%. When the ratio of manganese is equal to or greater than the lower limit, cost reduction can be achieved. The ratio of manganese can be set to a range of a combination of any of the upper limit values described above and any of the lower limit values described above.

The ratio of nickel in the metal elements excluding lithium in the lithium transition metal composite oxide is preferably 20 mol% or more and 80 mol% or less, may be 25 mol% or more and 75 mol% or less, is more preferably 30 mol% or more and 70 mol% or less, may be further preferably 35 mol% or more and 68 mol% or less, is further preferably 40 mol% or more and 65 mol% or less, still more preferably 45 mol% or more and 60 mol% or less, and may be still more preferably 47 mol% or more and 55 mol% or less. By setting the ratio of nickel in the above range, the capacity retention ratio after a charge-discharge cycle can be further increased.

The ratio of cobalt in the metal elements excluding lithium in the lithium transition metal composite oxide may be 1 mol% or more and 60 mol% or less, is preferably 5 mol% or more and 60 mol% or less, more preferably 10 mol% or more and 50 mol% or less, may be more preferably 15 mol% or more and 48 mol% or less, is further preferably 20 mol% or more and 45 mol% or less, may be still more preferably 25 mol% or more and 43 mol% or less, and is still more preferably 30 mol% or more and 40 mol% or less. By setting the ratio of cobalt in the above range, the capacity retention ratio after a charge-discharge cycle can be further increased. In addition, by setting the ratio of cobalt to be equal to or less than the upper limit, cost reduction can be achieved.

The lithium transition metal composite oxide may further contain a metal element other than lithium, manganese, nickel, and cobalt, such as aluminum. However, the ratio of the total amount of manganese, nickel, and cobalt to the metal elements excluding lithium in the lithium transition metal composite oxide is preferably 90 mol% or more, more preferably 99 mol% or more, and more preferably substantially 100 mol%.

The lithium transition metal composite oxide is preferably a lithium transition metal composite oxide having a layered α-NaFeO₂-type crystal structure. In addition, the lithium transition metal composite oxide is preferably a compound represented by the following formula 1.

Li_{1+α}Me_{1-α}O₂...1

In Formula 1, Me is two or more kinds of metal elements containing Mn at a ratio of 20 mol% or less. The condition of 0 ≤ α < 1 is met.

In Formula 1, α may be 0 or more and 0.5 or less, 0 or more and 0.3 or less, or 0 or more and 0.1 or less. Me preferably further contains at least one of Ni and Co in addition to Mn, and more preferably further contains both Ni and Co. As a suitable ratio of each of Mn, Ni, and Co to Me and the total amount, each of the ratios described above can be adopted as a suitable ratio of each of manganese, nickel, and cobalt to the metal elements excluding lithium in the lithium transition metal composite oxide and the total amount. Me may further contain a metal element other than Mn, Ni, and Co.

The surface of the lithium transition metal composite oxide may be coated with another material. Examples of another material for coating the surface include compounds containing aluminum, tungsten, boron, or the like, and a compound containing boron is preferable. Examples of the compound containing aluminum, tungsten, boron, or the like include oxides thereof. When the surface is coated with such a material, the capacity retention ratio of the nonaqueous electrolyte energy storage device after a charge-discharge cycle can be further increased.

The content of the lithium transition metal composite oxide containing manganese and having a ratio of manganese to metal elements other than lithium of 20 mol% or less in the positive active material layer is preferably 50% by mass or more and 99% by mass or less, more preferably 70% by mass or more and 98% by mass or less, and further preferably 80% by mass or more and 95% by mass or less. By setting the content of the lithium transition metal composite oxide in the above range, it is possible to increase the capacity retention ratio after a charge-discharge cycle while achieving both high energy density and manufacturability of the positive active material layer.

The positive active material may further contain a positive active material other than the lithium transition metal composite oxide. As other positive active material, various conventionally known positive active materials can be used. However, the content of the lithium transition metal composite oxide in all the positive active materials contained in the positive active material layer is preferably 90% by mass or more, more preferably 99% by mass or more. As described above, by mainly using the lithium transition metal composite oxide containing manganese and having a ratio of manganese to metal elements other than lithium of 20 mol% or less as the positive active material, the electron conductivity is sufficiently enhanced, whereby the capacity retention ratio after a charge-discharge cycle can be further increased.

The content of all the positive active materials in the positive active material layer is preferably 50% by mass or more and 99% by mass or less, more preferably 70% by mass or more and 98% by mass or less, further preferably 80% by mass or more and 95% by mass or less. By setting the content of all the positive active materials in the above range, it is possible to achieve both high energy density and productivity of the positive active material layer.

The positive active material is typically particles (powder). The average particle size of the positive active material is preferably 0.1 pm or more and 20 pm or less, for example. By setting the average particle size of the positive active material to be equal to or greater than the lower limit mentioned above, the positive active material is easily manufactured or handled. By setting the average particle size of the positive active material to be equal to or less than the upper limit mentioned above, the electron conductivity of the positive active material layer is improved. In the case of using a composite of the positive active material and another material, the average particle size of the composite is regarded as the average particle size of the positive active material. The term "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher or a classifier is used to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As a classification method, a sieve or a wind force classifier or the like is used based on the necessity both in dry manner and in wet manner.

The conductive agent is not particularly limited as long as it is a material exhibiting conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be used in mixture. In addition, these materials may be used in combination. For example, a material carbon black combined with a CNT may be used. Among them, carbon black is preferable from the viewpoint of electron conductivity and coatability, and in particular, acetylene black is preferable.

The content of the conductive agent in the positive active material layer is preferably 1% by mass or more and 10% by mass or less, more preferably 3% by mass or more and 9% by mass or less. By setting the content of the conductive agent in the above range, the energy density of the secondary battery can be enhanced.

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as ethylene-propylene-diene rubber (EPDM), sulfonated EPDM, styrene-butadiene rubber (SBR), and fluororubber; and polysaccharide polymers.

The content of the binder in the positive active material layer is preferably 1% by mass or more and 10% by mass or less, more preferably 2% by mass or more and 9% by mass or less. By setting the content of the binder in the above range, the active material can be stably held.

Examples of the thickener include polysaccharide polymers such as carboxymethylcellulose (CMC) and methylcellulose. When the thickener has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The positive active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Nb, or W as a component other than the positive active material, the conductive agent, the binder, the thickener, and the filler.

### (Negative electrode)

The negative electrode has a negative substrate and a negative active material layer disposed directly on the negative substrate or over the negative substrate with an intermediate layer interposed therebetween. The configuration of the intermediate layer is not particularly limited, and for example, can be selected from the configurations exemplified for the positive electrode.

The negative substrate has conductivity. As the material for the negative substrate, a metal such as copper, nickel, stainless steel, or a nickel-plated steel, or an alloy thereof, a carbonaceous material, or the like is used. Among these metals and alloys, copper or a copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include a rolled copper foil and an electrolytic copper foil.

The average thickness of the negative electrode substrate is preferably 2 pm or more and 35 pm or less, more preferably 3 pm or more and 30 pm or less, further preferably 4 pm or more and 25 pm or less, particularly preferably 5 pm or more and 20 pm or less. By setting the average thickness of the negative electrode substrate in the above range, it is possible to enhance the energy density per volume of a secondary battery while increasing the strength of the negative electrode substrate.

The negative active material layer contains a negative active material. The negative active material layer contains optional components such as a conductive agent, a binder, a thickener, and a filler, if necessary. The optional components such as a conductive agent, a binder, a thickener, and a filler can be selected from the materials exemplified for the positive electrode.

The negative active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Ta, Hf, Nb, or W as a component other than the negative active material, the conductive agent, the binder, the thickener, and the filler.

The negative active material contains graphite. The negative active material contains graphite, whereby the capacity retention ratio after a charge-discharge cycle can be increased. In addition, the negative active material contains graphite, whereby the depth of charge can be designed with high accuracy. Examples of the graphite include natural graphite, and artificial graphite. Artificial graphite is preferable from the viewpoint that a material having stable physical properties can be procured.

The depth of charge of graphite as a negative active material in a charged state is less than 0.54, preferably 0.53 or less, more preferably 0.52 or less. When the depth of charge of graphite is less than 0.54, the capacity retention ratio after a charge-discharge cycle can be increased. On the other hand, the depth of charge of graphite is preferably 0.40 or more, may be 0.41 or more, more preferably 0.42 or more, may be further preferably 0.43 or more or 0.44 or more, is further preferably 0.45 or more, 0.46 or more, 0.47 or more, still more preferably 0.48 or more or 0.49 or more, and particularly preferably 0.50 or more. When the depth of charge of graphite is equal to or greater than the lower limit, the energy density of the nonaqueous electrolyte energy storage device can be increased. The depth of charge of graphite can be set to a range of a combination of any of the upper limit values described above and any of the lower limit values described above.

The depth of charge of graphite as the negative electrode in the charged state can be adjusted, for example, by changing a ratio of a mass of graphite per unit area in the negative active material layer to a mass of the positive active material per unit area in the positive active material layer.

The content of graphite in the negative active material layer is preferably 60% by mass or more and 99% by mass or less, more preferably 90% by mass or more and 98% by mass or less, and may be further preferably 95% by mass or more. By setting the content of graphite in the above range, it is possible to achieve both high energy density and productivity of the negative active material layer, and the capacity retention ratio after a charge-discharge cycle can be further increased.

The negative active material may contain other negative active materials besides graphite. As other negative active material, various conventionally known negative active materials can be used. However, the content of graphite in all the negative active materials contained in the negative active material layer is preferably 90% by mass or more, more preferably 99% by mass or more, and may be substantially 100% by mass. As described above, by mainly using graphite as the negative active material, the capacity retention ratio after a charge-discharge cycle can be further increased. In addition, by setting the content of graphite in the negative active material to be equal to or greater than the lower limit, the depth of charge of graphite in the charged state can be designed with high accuracy.

The content of all the negative active materials in the negative active material layer is preferably 60% by mass or more and 99% by mass or less, more preferably 90% by mass or more and 98% by mass or less. By setting the content of all the negative active materials in the above range, it is possible to achieve both high energy density and productivity of the negative active material layer.

The graphite and other negative active materials are typically particles (powder). The average particle size of the negative active material can be, for example, 1 nm or more and 100 pm or less. The average particle size may be 1 pm or more and 100 pm or less. By setting the average particle size of the negative active material to be equal to or greater than the lower limit, the negative active material is easily produced or handled. By setting the average particle size of the negative active material to be equal to or less than the upper limit, the electron conductivity of the negative active material layer is improved. A crusher or a classifier is used to obtain a powder with a predetermined particle size. The crushing method and the powder classification method can be selected from, for example, the methods exemplified for the positive electrode.

The porosity of the negative active material layer is preferably 30% or more and 60% or less, more preferably 40% or more and 50% or less. When the porosity of the negative active material layer is in the above range, charge-discharge performance can be improved. The porosity of the negative active material layer can be adjusted by the strength of pressing when forming the negative active material layer, the material constituting the negative active material layer, and the like. The "porosity" of the negative active material layer is a volume-based value and is a value measured with a mercury porosimeter. Specifically, a step of taking out the negative electrode in a completely discharged state by the above-described procedure of measuring the "amount of charge per mass of graphite in the charged state" and immersing the negative electrode in dimethyl carbonate for 5 minutes is repeated twice to sufficiently wash the nonaqueous electrolyte attached to the negative electrode, and the washed negative electrode dried under reduced pressure at room temperature for a whole day and night is subjected to measurement.

### (Separator)

The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retaining properties of the nonaqueous electrolyte. As the material for the substrate layer of the separator, for example, a polyolefin such as polyethylene or polypropylene is preferable from the viewpoint of shutdown function, and polyimide, aramid or the like is preferable from the viewpoint of resistance to oxidative decomposition. As the substrate layer of the separator, a material obtained by combining these resins may be used.

The heat resistant particles contained in the heat resistant layer preferably have a mass loss of 5% or less when the temperature is raised from room temperature to 500°C in an air atmosphere at 1 atm, and more preferably have a mass loss of 5% or less when the temperature is raised from room temperature to 800°C. Examples of materials that have a mass loss equal to or less than a predetermined value include inorganic compounds. Examples of the inorganic compounds include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, simple substances or complexes of these substances may be used alone, or two or more thereof may be used in mixture. Among these inorganic compounds, silicon oxide, aluminum oxide, or aluminosilicate is preferable from the viewpoint of safety of the energy storage device.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel containing a polymer and a nonaqueous electrolyte may be used. Examples of the polymer include a polyacrylonitrile, a polyethylene oxide, a polypropylene oxide, a polymethyl methacrylate, a polyvinyl acetate, a polyvinylpyrrolidone, and a polyvinylidene fluoride. When the polymer gel is used, the effect of suppressing liquid leakage is acquired. As the separator, the polymer gel may be used concurrently with a porous resin film, a nonwoven fabric, or the like as described above.

### (Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution includes a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, solvents in which some hydrogen atoms contained in these compounds are substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these carbonates, EC is preferable.

Examples of the chain carbonates include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these carbonates, EMC is preferable.

As the nonaqueous solvent, it is preferable to use the cyclic carbonate or the chain carbonate, and it is more preferable to use the cyclic carbonate and the chain carbonate in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. In a case where a cyclic carbonate and a chain carbonate are used in combination, a volume ratio of the cyclic carbonate to the chain carbonate (cyclic carbonate : chain carbonate) is preferably in a range from 5 : 95 to 50 : 50, for example.

As the electrolyte salt, a lithium salt is used. Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these, inorganic lithium salts are preferable, and LiPF₆ is more preferable.

The content of the electrolyte salt in the nonaqueous electrolyte solution is, at 20°C under 1 atm, preferably 0.1 mol/dm³ or more and 2.5 mol/dm³ or less, more preferably 0.3 mol/dm³ or more and 2.0 mol/dm³ or less, further preferably 0.5 mol/dm³ or more and 1.7 mol/dm³ or less, particularly preferably 0.7 mol/dm³ or more and 1.5 mol/dm³ or less. By setting the content of the electrolyte salt in the above range, the ionic conductivity of the nonaqueous electrolyte solution can be increased.

The nonaqueous electrolyte solution may contain an additive, besides the nonaqueous solvent and the electrolyte salt. Examples of the additive include aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethyl sulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, and tetrakistrimethylsilyl titanate. One of these additives may be used, or two or more thereof may be used in mixture.

The content of the additive contained in the nonaqueous electrolyte solution is preferably 0.01% by mass or more and 10% by mass or less, more preferably 0.1% by mass or more and 7% by mass or less, further preferably 0.2% by mass or more and 5% by mass or less, particularly preferably 0.3% by mass or more and 3% by mass or less with respect to the mass of the entire nonaqueous electrolyte solution. By setting the content of the additive in the above range, it is possible to improve the capacity retention performance or cycle performance after high-temperature storage, or to further improve the safety.

For the nonaqueous electrolyte, a solid electrolyte may be used, or a nonaqueous electrolyte solution and a solid electrolyte may be used in combination.

The solid electrolyte can be selected from arbitrary materials, which exhibit lithium ion conductivity and are solid at normal temperature (for example, from 15°C to 25°C). Examples of the solid electrolyte include sulfide solid electrolytes, oxide solid electrolytes, oxynitride solid electrolytes, and polymer solid electrolytes. Examples of the sulfide solid electrolyte include Li₂S-P₂S₅, LiI-Li₂S-P₂S₅, and Li₁₀Ge-P₂S₁₂.

The shape of the nonaqueous electrolyte energy storage device according to the present embodiment is not particularly limited, and examples thereof include cylindrical batteries, prismatic batteries, flat batteries, coin batteries and button batteries.

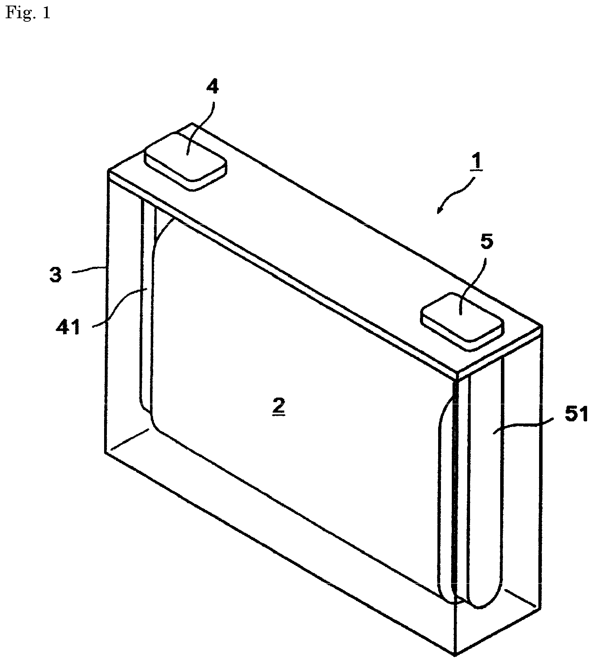

Fig. 1 illustrates a nonaqueous electrolyte energy storage device 1 as an example of prismatic batteries. Fig. 1 is a view illustrating the inside of a case in a perspective manner. An electrode assembly 2 including a positive electrode and a negative electrode wound with a separator interposed therebetween is housed in a prismatic battery case 3. The positive electrode is electrically connected to a positive electrode terminal 4 via a positive electrode lead 41. The negative electrode is electrically connected to a negative electrode terminal 5 via a negative electrode lead 51.

### <Energy storage apparatus>

The nonaqueous electrolyte energy storage device according to the present embodiment can be mounted as an energy storage unit (battery module) configured by assembling a plurality of nonaqueous electrolyte energy storage devices 1 on a power source for motor vehicles such as electric vehicles (EV), hybrid vehicles (HEV), and plug-in hybrid vehicles (PHEV), a power source for electronic equipment such as personal computers and communication terminals, or a power source for power storage, or the like. In this case, the technique of the present invention may be applied to at least one nonaqueous electrolyte energy storage device included in the energy storage unit.

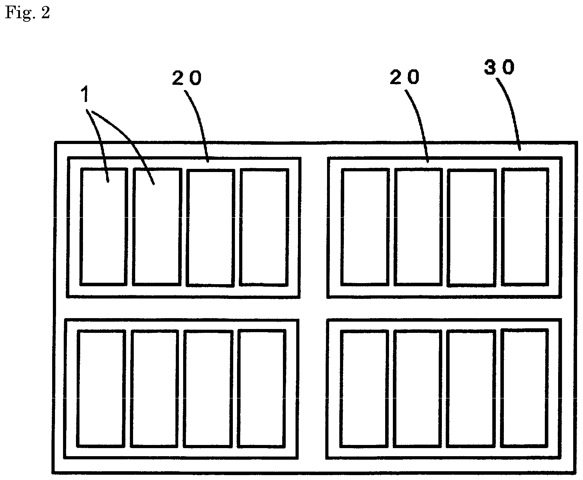

An energy storage apparatus according to an embodiment of the present invention includes one or more nonaqueous electrolyte energy storage devices according to an embodiment of the present invention. Fig. 2 illustrates an example of an energy storage apparatus 30 formed by assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices.

### <Method for manufacturing nonaqueous electrolyte energy storage device>

A method for manufacturing the nonaqueous electrolyte energy storage device of the present embodiment can be appropriately selected from known methods. The manufacturing method includes, for example, preparing an electrode assembly, preparing a nonaqueous electrolyte, and housing the electrode assembly and the nonaqueous electrolyte in a case. The preparation of the electrode assembly includes: preparing a positive electrode and a negative electrode, and forming an electrode assembly by stacking or winding the positive electrode and the negative electrode with a separator interposed therebetween.

Housing the nonaqueous electrolyte in the case can be appropriately selected from known methods. For example, in the case of using a nonaqueous electrolyte solution for the nonaqueous electrolyte, the nonaqueous electrolyte solution may be injected from an inlet formed in the case, followed by sealing the inlet.

### <Other embodiments>

The nonaqueous electrolyte energy storage device according to the present invention is not limited to the embodiment described above, and various changes may be made without departing from the gist of the present invention. For example, to the configuration of one embodiment, the configuration of another embodiment can be added, and a part of the configuration of one embodiment can be replaced by the configuration of another embodiment or a well-known technique. Furthermore, a part of the configuration according to one embodiment can be deleted. A well-known technique can be added to the configuration according to one embodiment.

In the embodiment, a case where the nonaqueous electrolyte energy storage device is used as a nonaqueous electrolyte secondary battery (lithium ion secondary battery) that is chargeable and dischargeable has been described, but the type, shape, dimensions, capacity, and the like of the nonaqueous electrolyte energy storage device are arbitrary. The present invention can also be applied to capacitors such as various secondary batteries, electric double layer capacitors, or lithium ion capacitors.

In the embodiment, an electrode assembly in which a positive electrode and a negative electrode are stacked with a separator interposed therebetween has been described, but the electrode assembly may not include a separator. For example, the positive electrode and the negative electrode may be brought into direct contact with each other in a state where a layer not exhibiting conductivity is formed on the active material layer of the positive electrode or negative electrode.

### EXAMPLES

Hereinafter, the present invention will be described in more detail with reference to Examples, but the present invention is not limited to the following Examples.

### [Example 1]

### (Fabrication of positive electrode)

A positive composite paste was prepared with the use of LlNi_{0.45}Co_{0.35}Mn_{0.20}O₂ as a positive active material, acetylene black (AB) as a conductive agent, a polyvinylidene fluoride (PVDF) as a binder, and an N-methylpyrrolidone (NMP) as a dispersion medium. It is to be noted that the mass ratios of the positive active material, AB, and PVDF were set to be 93 : 3.5 : 3.5 (in terms of solid content). The positive composite paste was applied to both surfaces of an aluminum foil as a positive substrate, and dried. Thereafter, roll pressing was performed to obtain a positive electrode.

### (Fabrication of negative electrode)

Graphite as a negative active material, a styrene-butadiene rubber (SBR) as a binder, carboxymethyl cellulose (CMC) as a thickener, and water as a dispersion medium were used to prepare a negative composite paste. It is to be noted that the mass ratios of graphite, SBR, and CMC were set to be 97.5 : 1.5 : 1 (in terms of solid content). The negative composite paste was applied to both surfaces of a copper foil as a negative substrate, and dried. Thereafter, roll pressing was performed to obtain a negative electrode.

The ratio of the mass of graphite per unit area in the negative active material layer to the mass of the positive active material per unit area in the positive active material layer was adjusted so that the depth of charge of graphite in the charged state was 0.52.

### (Nonaqueous electrolyte solution)

LiPF₆ was dissolved at a concentration of 1.2 mol/dm³ in a solvent obtained by mixing an ethylene carbonate and an ethyl methyl carbonate at a volume ratio of 30 : 70 to obtain a nonaqueous electrolyte solution.

### (Separator)

A polyolefin microporous membrane was used for the separator.

### (Assembly of nonaqueous electrolyte energy storage device)

The positive electrode, the negative electrode, and the separator were used to obtain a wound electrode assembly. The electrode assembly was housed in a case, and the nonaqueous electrolyte solution was injected into the case, and the case was sealed to obtain a nonaqueous electrolyte energy storage device (secondary battery) of Example 1.

### [Examples 2 to 3 and Comparative Examples 1 to 6]

Nonaqueous electrolyte energy storage devices of Examples 2 to 3 and Comparative Examples 1 to 6 were obtained in the same manner as in Example 1 except that the positive active material described in Table 1 was used, and the ratio of the mass of graphite per unit area in the negative active material layer to the mass of the positive active material per unit area in the positive active material layer was adjusted so that the depth of charge of graphite in the charged state was the value described in Table 1.

### [Evaluation]

### (1) Initial discharge capacity checking test

The obtained respective nonaqueous electrolyte energy storage devices were subjected to an initial discharge capacity checking test under the following conditions. In a constant temperature bath at 25°C, constant current charge was performed at a charge current of 1.0 C and an end-of-charge voltage of 4.10 V, and then constant voltage charge was performed at 4.10 V With regard to the charge termination conditions, charge was performed until the total charge time reached 3 hours. Thereafter, a pause time of 10 minutes was provided. Constant current discharge was performed at a discharge current of 1.0 C and an end-of-discharge voltage of 2.50 V Thus, the initial discharge capacity was measured.

### (2) Capacity retention ratio after charge-discharge cycle of 2000 hours

Subsequently, the following charge-discharge cycle test was performed. In a constant temperature bath at 60°C, the nonaqueous electrolyte energy storage device was charged at a constant current of an amount of electricity of 85% of the initial discharge capacity at a charge current of 4.0 C to adjust SOC to 85%. Thereafter, the nonaqueous electrolyte energy storage device was discharged at a constant current of an amount of electricity of 70% of the initial discharge capacity at a discharge current of 4.0 C without providing a pause period to adjust SOC to 15%. Subsequently, the nonaqueous electrolyte energy storage device was charged at a constant current of an amount of electricity of 70% of the initial discharge capacity at 4.0 C to adjust SOC to 85%. Thereafter, the nonaqueous electrolyte energy storage device was discharged at a constant current of an amount of electricity of 70% of the initial discharge capacity at a discharge current of 4.0 C without providing a pause period to adjust SOC to 15%. This charge-discharge was performed for 2000 hours. Thereafter, a discharge capacity checking test was performed in the same manner as in the above (1). Thus, the discharge capacity after the charge-discharge cycle of 2000 hours was measured. The percentage of the discharge capacity after the charge-discharge cycle of 2000 hours with respect to the initial discharge capacity was calculated, and regarded as the capacity retention ratio after the charge-discharge cycle of 2000 hours (%). The results are shown in Table 1.

**[Table 1]**

| | Positive active material | | Depth of charge of graphite | Capacity retention ratio (%) |
|---|---|---|---|---|
| | Composition formula | Mn Ratio (mol%) | | |
| Example 1 | LiNi_{0.45}Co_{0.35}Mn_{0.20}O₂ | 20 | 0.52 | 82 |
| Example 2 | LiNi_{0.50}CO_{0.35}Mn_{0.15}O₂ | 15 | 0.52 | 83 |
| Example 3 | LiNi_{0.50}CO_{0.35}Mn_{0.15}O₂ ^{*1} | 15 | 0.52 | 84 |
| Comparative Example 1 | LiNi_{0.33}CO_{0.33}Mn_{0.33}O₂ | 33 | 0.52 | 77 |
| Comparative Example 2 | LiNi_{0.35}Co_{0.45}Mn_{0.20}O₂ | 20 | 0.62 | 80 |
| Comparative Example 3 | LiNi_{0.50}Co_{0.35}Mn_{0.15}O₂ | 15 | 0.62 | 80 |
| Comparative Example 4 | LiN_{0..33}Co_{0.33}Mn_{0.33}O₂ | 33 | 0.62 | 77 |
| Comparative Example 5 | LiNi_{0.33}Co_{0.33}Mn_{0.33}O₂ | 33 | 0.54 | 78 |
| Comparative Example 6 | LiNi_{0.45}Co_{0.35}Mn_{0.20}O₂ | 20 | 0.54 | 80 |

| | | | | |
|---|---|---|---|---|
| *1: The positive active material of Example 3 is LiNi_{0.50}Co_{0.35}Mn_{0.15}O₂ whose surface is coated with a boron compound. | | | | |

As shown in Table 1, in the nonaqueous electrolyte energy storage devices of Examples 1 to 3 in which the positive active material is a lithium transition metal composite oxide in which the ratio of manganese to metal elements other than lithium is 20 mol% or less, and the depth of charge of graphite as the negative active material in the charged state was less than 0.54, the capacity retention ratio after the charge-discharge cycle of 2000 hours exceeded 80%. As described above, it was shown that the nonaqueous electrolyte solution energy storage device has a high capacity retention ratio after a charge-discharge cycle when the nonaqueous electrolyte solution energy storage device includes a positive electrode including a lithium transition metal composite oxide containing manganese; and a negative electrode including graphite, in which the ratio of manganese to metal elements other than lithium in the lithium transition metal composite oxide is 20 mol% or less, and the depth of charge of the graphite in the charged state is less than 0.54.

### INDUSTRIAL APPLICABILITY

The present invention can be applied to a nonaqueous electrolyte energy storage device and an energy storage apparatus, which are used as a power source for electronic devices such as personal computers and communication terminals, motor vehicles, and the like.

### DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A nonaqueous electrolyte energy storage device comprising:
a positive electrode including a lithium transition metal composite oxide containing manganese; and
a negative electrode including graphite,
wherein a ratio of manganese to metal elements other than lithium in the lithium transition metal composite oxide is 20 mol% or less, and
depth of charge of the graphite in a charged state is less than 0.54.

2. The nonaqueous electrolyte energy storage device according to claim 1, wherein the lithium transition metal composite oxide further contains nickel and cobalt.

3. The nonaqueous electrolyte energy storage device according to claim 1 or 2, wherein the ratio of manganese to metal elements other than lithium in the lithium transition metal composite oxide is 1 mol% or more.

4. The nonaqueous electrolyte energy storage device according to claim 1, 2, or 3, wherein the depth of charge of the graphite in the charged state is 0.40 or more.

5. An energy storage apparatus comprising one or more nonaqueous electrolyte energy storage devices according to any one of claims 1 to 4.
